# EUROPÄISCHE PATENTSCHRIFT

(11) **EP 2 561 256 B1**
(45) Veröffentlichungstag und Bekanntmachung des Hinweises auf die Patenterteilung: **04.06.2014**
(21) Anmeldenummer: 11722994.8
(22) Anmeldetag: 18.04.2011
(51) Int. Cl.: F16J 15/34

(54) **GLEITRINGDICHTUNG MIT ROTIERENDEM GEGENRING MIT EXAKT DEFINIERTER EINSPANNUNG**
SLIDE RING SEAL WITH A ROTATING COUNTER RING WITH AN EXACTLY DEFINED CLAMPED MOUNTING
GARNITURE MECANIQUE D'ETANCHEITE DOTEE D'UNE CONTRE-BAGUE ROTATIVE A SERRAGE DEFINI AVEC PRECISION

(30) Priorität: 18.06.2010 DE 102010024291; 23.04.2010 DE 102010018307
(43) Veröffentlichungstag der Anmeldung: 27.02.2013
(73) Patentinhaber: Carl Freudenberg KG, 69469 Weinheim (DE)
(72) Erfinder: KIRCHHOF, Martin, 83714 Miesbach (DE); LAXANDER, Armin, 82067 Ebenhausen (DE); LEDERER, Günther, 82538 Geretsried (DE); KELLER, Thomas, 82538 Geretsried (DE)
(86) Internationale Anmeldenummer: PCT/EP2011/001955
(87) Internationale Veröffentlichungsnummer: WO 2011/131328

(56) Entgegenhaltungen:
- DD-A1- 107 762
- DE-A1-102006 028 153

## Beschreibung

### Technisches Gebiet

Die Erfindung betrifft eine Gleitringdichtung, umfassend einen rotierenden Gegenring und einen stationären Gleitring, wobei der Gegenring und der Gleitring jeweils aneinander liegende Dichtflächen aufweisen und wobei die Dichtfläche des Gegenrings der Dichtfläche des Gleitrings gegenüberliegt.

### Stand der Technik

Gleitringdichtungen der eingangs genannten Art sind aus der EP 1 209 386 A1 oder der DD-A-107762 bereits bekannt.

Ein Gegenring kann mit Gleitgeschwindigkeiten bezogen auf den mittleren Gleitflächendurchmesser von bis zu 200 m/s relativ zum stationären Gleitring rotieren. Bei hohen Gleitgeschwindigkeiten kommt es infolge von viskoser Reibung im Dichtspalt zu einem erheblichen Wärmeeintrag in Gleit- und Gegenring. Axiale Temperaturgradienten in Gleit- und Gegenring können zu großen Verformungen der Ringe führen. Dabei kann sich die Geometrie des Dichtspalts in unerwünschter Weise bzw. unzulässiger Weise verändern und zwar hinsichtlich der Höhe des Dichtspalts als auch dessen V-förmiger Aufweitung.

Vor diesem Hintergrund ist aus der EP 1 209 386 A1 bekannt, einen rotierenden Gegenring auf einer Welle drehfest mit einer Buchse und einem Einspannelement zu verspannen.

Bei den bekannten Gleitringdichtungen ist nachteilig, dass der rotierende Gegenring während der Rotation unerwünschte Verkippungen ausführen kann. Hierbei kann es zu unerwünschten Veränderungen der Geometrie des Dichtspalts zwischen den Dichtflächen kommen. Die Gleitringdichtung kann dann nicht mehr während aller auftretenden Betriebszustände eine zuverlässige Funktion gewährleisten.

Insbesondere bei der Verwendung von Gleitringdichtungen in Turbomaschinen, beispielsweise Kompressoren oder Gasturbinen, mit stark variierenden Betriebsbedingungen hinsichtlich Druck, Drehzahl und Temperatur bestehen jedoch sehr hohe Anforderungen an Funktion und Betriebssicherheit der Gleitringdichtungen.

### Darstellung der Erfindung

Der Erfindung liegt daher die Aufgabe zugrunde, eine Gleitringdichtung der eingangs genannten Art derart auszugestalten und weiterzubilden, dass diese auch bei variierenden und unterschiedlichen Drehzahlen, Drücken und Temperaturen eine zuverlässige Funktion und Betriebssicherheit gewährleistet.

Die vorliegende Erfindung löst die zuvor genannte Aufgabe durch die Merkmale des Patentanspruchs 1.

Danach ist die eingangs genannte Gleitringdichtung dadurch gekennzeichnet, dass der Gegenring zwei Radialebenen aufweist, denen jeweils ein Einspannnocken zugeordnet ist.

Erfindungsgemäß ist erkannt worden, dass durch axial abragende Einspannnocken eine definierte Einspannung des Gegenrings sichergestellt werden kann. Auftretende Kippmomente können überraschend leicht kompensiert und vermieden werden. Dabei ist zunächst erkannt worden, dass ein zwischen Einspannelementen eingespannter Gegenring mit diesen in Reibkontakt treten kann. Hierbei treten Reibkräfte auf, welche Kippmomente bewirken. Darauf ist erkannt worden, dass Einspannnocken derart angeordnet werden können, dass angreifende Kippmomente sich gegenseitig kompensieren. Hierbei ist konkret erkannt worden, dass die Einspannnocken eine Ebene definieren, an denen die Kippmomente definiert und kompensierbar angreifen können. Überraschend zeigt der Gegenring daher auch bei stark variierenden Belastungen in Bezug auf Druck, Drehzahl und Temperatur ein hohes Maß an Stabilität im Hinblick auf sein Verkippungsverhalten. Dadurch wird auch bei stark variierenden Betriebsbedingungen eine optimale Geometrie des Dichtspalts aufrecht erhalten.

Unter Zuordnung der Einspannnocken zu den Radialebenen wird entweder eine Ausbildung der Einspannnocken am Gegenring direkt oder an den Einspannelementen der Welle verstanden.

Folglich ist die eingangs genannte Aufgabe gelöst.

Der Gegenring könnte zwei Radialebenen aufweisen von denen jeweils ein Einspannnocken in axialer Richtung abragt. Vorteilhaft sind die Einspannnocken am Gegenring und nicht an der Buchse und dem Einspannelement ausgebildet. Dies hängt damit zusammen, dass das für den Gegenring verwendete Material weicher ist als die Materialien für die Buchse bzw. das Einspannelement. Des Weiteren wird eine gleichmäßige Abnutzung der Einspannnocken angestrebt.

Die Einspannnocken könnten ringförmig und konzentrisch zum Gegenring ausgebildet sein. Hierdurch kann der Gegenring über eine Linienpressung auf der Welle verankert werden.

Die Einspannnocken könnten aus dem Gegenring herausgebildet und mit diesem einstückig ausgebildet sein.

Die Einspannnocken könnten beidseitig des Gegenrings in radialer Richtung auf gleicher Höhe ausgebildet sein. Hierdurch ist sichergestellt, dass auftretende Kippmomente auf der gleichen Ebene angreifen und sich vorteilhaft gegenseitig kompensieren können.

Sobald sich nämlich der Gegenring und die Welle radial relativ zueinander bewegen, treten Kippmomente auf. Diese Kippmomente werden dadurch kompensiert, dass die Einspannnocken auf gleicher radialer Höhe angeordnet sind.

Eine Anordnung könnte eine Gleitringdichtung der hier beschriebenen Art und eine Welle aufweisen, wobei der Gegenring mit der Welle mittels eines Einspannelements und einer Buchse drehfest verbunden ist und wobei ein erster Einspannnocken an der Buchse und der zweite Einspannnocken am Einspannelement anliegt. Durch die Buchse und das Einspannelement kann der Gegenring definiert auf der Welle eingespannt werden.

Die hier beschriebene Gleitringdichtung eignet sich in besonderer Weise zur Verwendung in Turbomaschinen, beispielsweise Kompressoren oder Gasturbinen, da diese auch bei variierenden und unterschiedlichen Drehzahlen, Drücken und Temperaturen eine zuverlässige Funktion gewährleistet.

Die hier beschriebene Gleitringdichtung dichtet ein Gas oder ein Gemisch aus einem Gas und einer Flüssigkeit ab, wobei die Dichtflächen gasgeschmiert sind.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Gleitringdichtung an Hand der Zeichnung zu verweisen.

In Verbindung mit der Erläuterung des bevorzugten Ausführungsbeispiels an Hand der Zeichnung werden im Allgemeinen bevorzugte Ausgestaltungen und Weiterbildungen der Lehre erläutert.

### Kurzbeschreibung der Zeichnung

In der Zeichnung zeigen
- Fig. 1: eine Schnittansicht einer Gleitringdichtung des Stands der Technik, bei welcher der rotierende Gegenring in axialer Richtung keine Einspannnocken aufweist, und
- Fig. 2: eine Schnittansicht eines wellenseitigen Teils einer Gleitringdichtung, bei welcher der Gegenring beidseitig abragende Einspannnocken aufweist.

### Ausführung der Erfindung

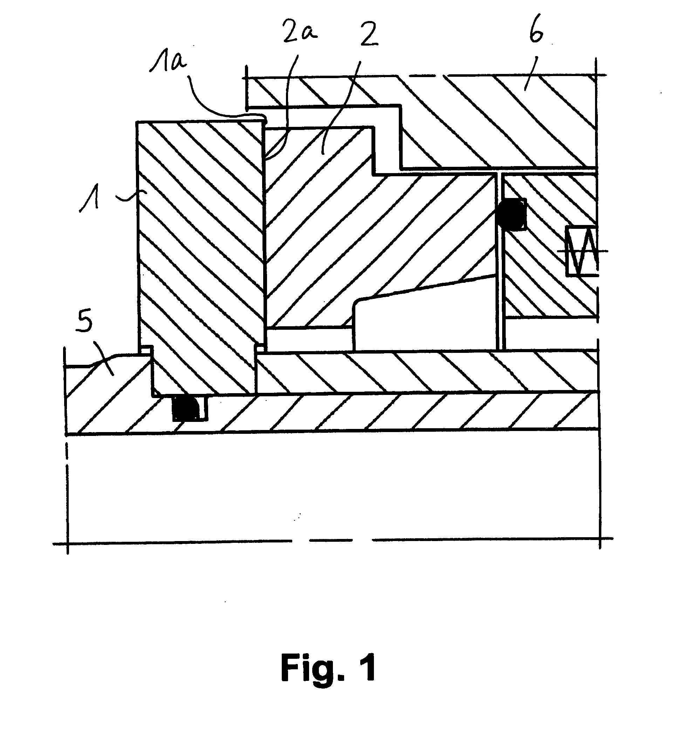

Fig. 1 zeigt eine Gleitringdichtung des Stands der Technik.

Die in Fig. 1 gezeigte Gleitringdichtung umfasst einen rotierenden Gegenring 1 und einen stationären Gleitring 2, wobei der Gegenring 1 und der Gleitring 2 jeweils aneinander liegende Dichtflächen 1a, 2a aufweisen, wobei die Dichtfläche 1a des Gegenrings 1 der Dichtfläche 2a des Gleitrings 2 gegenüberliegt.

Der rotierende Gegenring 1 ist einer drehenden Welle 5 fest zugeordnet und rotiert mit dieser. Der stationäre Gleitring 2 ist in einem Gehäuse 6 lose zentriert angeordnet.

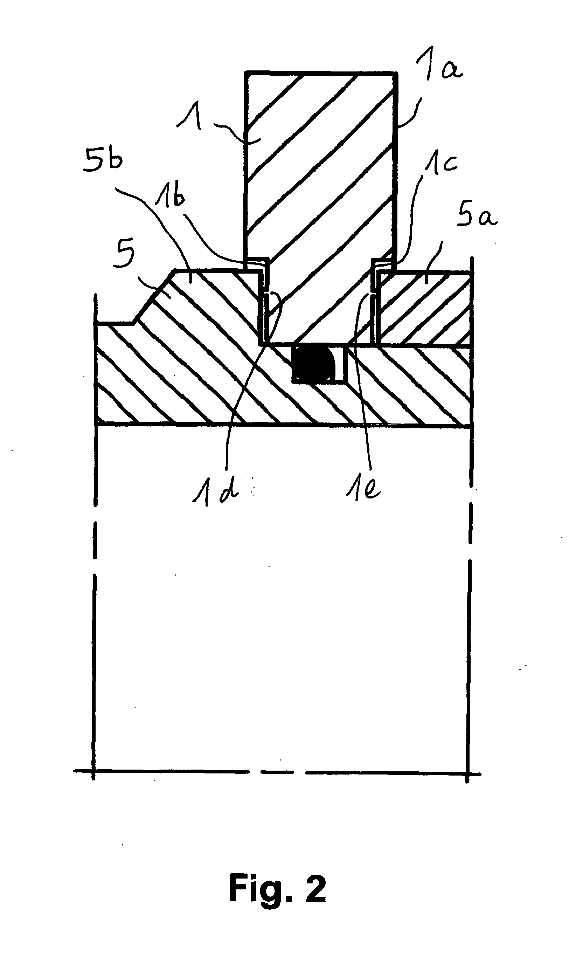

Fig. 2 zeigt den wellenseitigen Teil einer Gleitringdichtung mit analogem Aufbau wie die Gleitringdichtung gemäß Fig. 1, umfassend einen rotierenden Gegenring 1 und einen stationären Gleitring 2, wobei der Gegenring 1 und der Gleitring 2 jeweils aneinander liegende Dichtflächen 1a, 2a aufweisen, wobei die Dichtfläche 1a des Gegenrings 1 der Dichtfläche 2a des Gleitrings 2 axial gegenüberliegt. Der Gegenring 1 weist zwei axial gegenüberliegende Radialebenen 1 b, 1 c auf von denen jeweils ein Einspannnocken 1 d, 1 e in axialer Richtung abragt. Die Einspannnocken 1d, 1e ragen beidseitig vom Gegenring 1 ab.

Die Einspannnocken 1d, 1e sind ringförmig und konzentrisch zum Gegenring 1 ausgebildet. Sie können jedoch auch nur partiell auf den Radialebenen 1 b, 1c ausgebildet sein.

Die Radialebenen 1b, 1c sind gegenüber der Dichtfläche 1a sowie der der Dichtfläche 1a gegenüberliegenden Radialebene axial nach innen versetzt.

Die Einspannnocken 1d, 1e sind beidseitig des Gegenrings 1 in radialer Richtung auf gleicher Höhe relativ zur Drehachse der Welle 5 ausgebildet.

Konkret zeigt Fig. 2 den wellenseitigen Teil einer Anordnung, umfassend eine Gleitringdichtung der zuvor beschriebenen Art und eine rotierbare Welle 5, wobei der Gegenring 1 mit der Welle 5 mittels eines Einspannelements 5a und einer Buchse 5b drehfest verbunden ist und wobei ein erster Einspannnocken 1d an der Buchse 5b und der zweite Einspannnocken 1 e am Einspannelement 5a anliegt.

Vorteilhaft sind die Einspannnocken 1d, 1e am Gegenring 1 und nicht an der Buchse 5b und dem Einspannelement 5a ausgebildet. Dies hängt damit zusammen, dass das für den Gegenring 1 verwendete Material weicher ist als die Materialien für die Buchse 5b bzw. das Einspannelement 5a. Des Weiteren wird eine gleichmäßige Abnutzung der Einspannnocken 1 d, 1 e angestrebt.

Der Gegenring 1 ist aus Metall gefertigt und weist einen Durchmesser (Innenmass) von 300 mm auf.

Der Gleitring 2 ist aus einem Kohlewerkstoff gefertigt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Gleitringdichtung, umfassend einen rotierenden Gegenring (1) und einen stationären Gleitring (2), wobei der Gegenring (1) und der Gleitring (2) jeweils aneinander liegende Dichtflächen (1a, 2a) aufweisen und wobei die Dichtfläche (1a) des Gegenrings (1) der Dichtfläche (2a) des Gleitrings (2) gegenüberliegt,
**dadurch gekennzeichnet, dass** der Gegenring (1) zwei Radialebenen (1b, 1c) aufweist, denen jeweils ein Einspannnocken (1d, 1e) zugeordnet ist.

2. Gleitringdichtung nach Anspruch 1, **dadurch gekennzeichnet, dass** der Gegenring (1) zwei Radialebenen (1b, 1c) aufweist, von denen jeweils ein Einspannnocken (1d, 1e) in axialer Richtung abragt.

3. Gleitringdichtung nach Anspruch 1 oder 2, **dadurch gekennzeichnet, dass** die Einspannnocken (1d, 1e) ringförmig und konzentrisch zum Gegenring (1) ausgebildet sind

4. Gleitringdichtung nach einem der Ansprüche 1 bis 3, **dadurch gekennzeichnet, dass** die Einspannnocken (1d, 1e) beidseitig des Gegenrings (1) in radialer Richtung auf gleicher Höhe ausgebildet sind.

5. Anordnung, umfassend eine Gleitringdichtung nach einem der voranstehenden Ansprüche und eine Welle (5), wobei der Gegenring (1) mit der Welle (5) mittels eines Einspannelements (5a) und einer Buchse (5b) drehfest verbunden ist und wobei ein erster Einspannnocken (1d) an der Buchse (5b) und der zweite Einspannnocken (1 e) am Einspannelement (5a) anliegt.

## Claims

1. Slide ring seal, comprising a rotating counter ring (1) and a stationary slide ring (2), wherein the counter ring (1) and the slide ring (2) in each case have sealing surfaces (1a, 2a) bearing against each other, and wherein the sealing surface (1a) of the counter ring (1) is opposite the sealing surface (2a) of the slide ring (2), **characterized in that** the counter ring (1) has two radial planes (1b, 1c) which are in each case assigned a clamping cam (1d, 1e).

2. Slide ring seal according to Claim 1, **characterized in that** the counter ring (1) has two radial planes (1b, 1c), from which a clamping cam (1d, 1e) protrudes in each case in the axial direction.

3. Slide ring seal according to Claim 1 or 2, **characterized in that** the clamping cams (1d, 1e) are formed annularly and concentrically with respect to the counter ring (1).

4. Slide ring seal according to one of Claims 1 to 3, **characterized in that** the clamping cams (1d, 1e) are formed at the same height in the radial direction on both sides of the counter ring (1).

5. Arrangement, comprising a slide ring seal according to one of the preceding claims and a shaft (5), wherein the counter ring (1) is connected to the shaft (5) for rotation therewith by means of a clamping element (5a) and a bushing (5b), and wherein a first clamping cam (1d) bears against the bushing (5b) and the second clamping cam (1e) bears against the clamping element (5a).

## Revendications

1. Garniture mécanique d'étanchéité, comprenant une bague conjuguée rotative (1) et une bague de glissement stationnaire (2), la bague conjuguée (1) et la bague de glissement (2) présentant chacune des surfaces d'étanchéité appliquées l'une contre l'autre (1a, 2a) et la surface d'étanchéité (1a) de la bague conjuguée (1) étant opposée à la surface d'étanchéité (2a) de la bague de glissement (2),
**caractérisée en ce que** la bague conjuguée (1) présente deux plans radiaux (1b, 1c) auxquels est à chaque fois associée une came de serrage (1d, 1e).

2. Garniture mécanique d'étanchéité selon la revendication 1, **caractérisée en ce que** la bague conjuguée (1) présente deux plans radiaux (1b, 1c) depuis lesquels fait à chaque fois saillie une came de serrage (1d, 1e) dans la direction axiale.

3. Garniture mécanique d'étanchéité selon la revendication 1 ou 2, **caractérisée en ce que** les cames de serrage (1d, 1e) sont réalisées sous forme annulaire et de manière concentrique par rapport à la bague conjuguée (1).

4. Garniture mécanique d'étanchéité selon l'une quelconque des revendications 1 à 3, **caractérisée en ce que** les cames de serrage (1d, 1e) sont réalisées dans la direction radiale à la même hauteur des deux côtés de la bague conjuguée (1).

5. Agencement, comprenant une garniture mécanique d'étanchéité selon l'une quelconque des revendications précédentes et un arbre (5), la bague conjuguée (1) étant connectée de manière solidaire en rotation à l'arbre (5) au moyen d'un élément de serrage (5a) et d'une douille (5b) et une première came de serrage (1d) s'appliquant contre la douille (5b) et la deuxième came de serrage (le) s'appliquant contre l'élément de serrage (5a).
